# EUROPÄISCHE PATENTSCHRIFT

(11) **EP 0 385 236 B1**
(45) Veröffentlichungstag und Bekanntmachung des Hinweises auf die Patenterteilung: **05.10.1994**
(21) Anmeldenummer: 90103231.8
(22) Anmeldetag: 20.02.1990
(51) Int. Cl.: A01C 17/00

(54) **Schleuderstreuer für Dünger**
Centrifugal spreader for fertilizer
Epandeur d'engrais à projection centrifuge

(30) Priorität: 03.03.1989 DE 3906757
(43) Veröffentlichungstag der Anmeldung: 05.09.1990
(73) Patentinhaber: RAUCH LANDMASCHINENFABRIK GMBH, D-76545 Sinzheim (DE)
(72) Erfinder: Rauch, Norbert, Dipl.-Ing., D-7573 Sinzheim (DE)
(74) Vertreter: Lichti, Heiner, Dipl.-Ing.

(56) Entgegenhaltungen:
- WO-A-88/09609
- DE-A- 3 502 569
- DE-B- 2 835 011
- GB-A- 2 120 914

## Beschreibung

Die Erfindung betrifft einen Schleuderstreuer für Dünger, bestehend aus einem Vorratsbehälter mit zwei mit Abstand voneinander angeordneten, einstellbaren Auslauföffnungen, und je einer unter jeder Auslauföffnung angeordneten Schleuderscheibe, die beide mittels je eines Hydromotors mit regelbarer Drehzahl angetrieben und an einem maschinenfest an einer senkrechten Achse gelagerten Schwenkarm angeordnet sind, mittels dessen sie aus der Betriebsstellung unterhalb der Auslauföffnung in eine den Raum unterhalb derselben freigebende Stellung gleichsinnig schwenkbar sind.

Der vorgenannte Schleuderstreuer (WO 88/09609) gehört der Gattung der Zweischeibenstreuer an, die sich in der Praxis zunehmend gegenüber Einscheibenstreuern durchsetzen. Der Grund liegt einerseits in der größeren Arbeitsbreite bei gleichzeitig größerem Fassungsvermögen des Vorratsbehälters, andererseits in der Tatsache, daß sich mit einem Zweischeibenstreuer ein gleichmäßigeres Streubild erzielen läßt.

Beim Einscheibenstreuer bildet das Streubild (Streumenge über Streubreite) eine unsymmetrische Kurve. Dies ist dann nicht sonderlich störend, wenn - wie beispielsweise bei Straßenstreuern - nur ein einziger Streifen gestreut wird (DE-A-34 27 367, 3 502 569). Beim Streuen von Dünger hingegen müssen mehrere Streifen nebeneinander gelegt werden. Bei diesem sogenannten Anschlußfahren werden die Streubilder auf die geschwünschte Arbeitsbreite zur Überlappung gebracht. Durch die Unsymmetrie entsteht ein wellenartiges Gesamtprofil. Ist das unsymmetrische Streubild gegenüber der Fahrgasse auch noch versetzt, so kommt es im Überlappungsbereich zur Verdopplung der Fehler in der Streumenge, was zu Streifen mit Über- und Unterdüngung führt. Um den Versatz des Streubildes zur Fahrgasse zu vermeiden und das Mengenmaximum etwa in die Fahrgasse zu verlegen, kann der Aufgabepunkt des Düngers auf der Schleuderscheibe variiert werden (DE-A-14 57 879).

Die Lage des Streubildes hängt ferner von der Düngerart ab, insbesondere von Kornform, Kornspektrum (Kornverteilung) und spezifischem Gewicht des Düngers. Um diesen düngerspezifischen Eigenschaften Rechnung zu tragen, bedient man sich in erster Linie einer Veränderung des Aufgabepunktes. Hierzu sind verschiedene konstruktive Möglichkeiten bekannt, beispielsweise ist der die Auslauföffnung aufweisende Boden des Vorratsbehälters auswechselbar (DE-A-28 35 011), wobei je nach Düngerart Böden mit verschieden angeordneten Auslauföffnungen eingesetzt werden. Das Auswechseln des Bodens ist überaus umständlich und kann nur bei leerem Vorratsbehälter durchgeführt werden. Weiterhin ist es bei Zweischeibenstreuern bekannt (DE-U-88 07 900), an die Auslauföffnung eine Rutsche anzuschließen und diese zu verstellen, um Streubild und Streubreite zu verändern. Dadurch wird jedoch die Übergabe des Düngers auf die Schleuderscheibe ungünstig beeinflußt und zwischen Schleuderscheibe und Boden muß eine entsprechende Bauhöhe vorhanden sein, die - bei maximal zulässig hoher Einfüllkante des Vorratsbehälters - zum Verlust an Behältervolumen führt. Weiterhin ist es zur Änderung der Streubreite bei Straßenstreuern und Düngerstreuern (DE-A-20 41 804, 20 31 557) bekannt, die Scheiben zu neigen. Während dies bei Straßenstreuern durch Neigen der einzelnen Scheiben geschieht, ist es bei Düngerstreuern aus der Praxis bekannt, den gesamten Streuer zu neigen und den Abgangswinkel an der Schleuderscheibe zu ändern. So wird der Streuer bei rauhem und eckigem Korn nach hinten unten geneigt, um mehr in die Mitte zu streuen, während er bei glattem Korn hinten angehoben wird, um mit dem Dünger weiter nach außen zu kommen. Die Einstellung ist überaus schwierig und muß auf Zentimeter genau erfolgen. Sie versagt bei unebenem Gelände und führt aufgrund der Neigung gleichfalls zur Reduzierung der maximalen Füllmenge des Behälters.

Schließlich ist es bekannt, die gesamte Öffnungsmechanik für die Auslauföffnung zu verändern, was wiederum zu einer sehr komplizierten Konstruktion führt, da die gesamte Öffnungsmechanik bei Mengenverstellung mitbewegt werden muß. Schließlich ist es bekannt (z. B. DE-A-2 192 873), Scheiben mit verschiedenen Wurfflügeln und/oder verstellbaren Wurfflügeln zu verwenden. Auch dies erfordert aufwendige Montagearbeiten. Hinzu kommt, daß die Schleuderscheibe und die Wurfflügel starkem Verschleiß ausgesetzt sind, so daß sich kaum eine bleibende und gut erkennbare Markierung für die verschiedenen Einstellmöglichkeiten anbringen läßt.

Die vorgenannten konstruktiven Möglichkeiten zur Veränderung des Streubildes sind, wie schon angedeutet, auch bei Zweischeibenstreuern verwirklicht. Dort führen sie aber zu anderen Effekten und teilweise unliebsamen Ergebnissen. Dies liegt im wesentlichen daran, daß sich das Streubild bei einem Zweischeibenstreuer in anderer Weise aufbaut und auch in anderer Weise beeinflußt werden kann. Aufgrund der zwei Scheiben ist zunächst sichergestellt, daß das Streubild, wie immer es aussieht, symmetrisch zur Fahrgasse ausgebildet ist. Im Idealfall soll das Streubild flach dreieckförmig mit in Fahrzeuglängsachse liegender Spitze sein, wobei die Arbeitsbreite durch diejenigen Punkte beiderseits der Fahrzeuglängsachse bestimmt wird, an denen die Hälfte der maximalen Streumenge liegt. Durch Anschlußfahren und Überlappen des Streubildes auf der Arbeitsbreite läßt sich dann im Idealfall ein hinter dem Streuer lineares Streubild erzeugen. Dieses ideale Streubild ergibt sich bei einer bestimmten Maschineneinstellung jedoch nur für eine ganz bestimmte Düngerart. Bei einem anderen Dünger weicht das Streubild von der Dreiecksform ab. So werden beispielsweise bei einem glatten Düngerkorn eine Überhöhung des Streubildes in der Mitte, bei rauhem Düngerkorn hingegen symmetrische Überhöhungen beiderseits der Mitte beobachtet. Beide Effekte lassen sich durch das Anschlußfahren nicht mehr egalisieren.

Eine bekannte Ausführung eines Zweischeibenstreuers (EP 222 337) geht von der Erkenntnis aus, daß sich das Streubild auch in Abhängigkeit von der Streumenge bzw. der Ausbringmenge an der Auslauföffnung ändert, da beispielsweise durch Änderung des freien Querschnitts der Auslauföffnung der Aufgabepunkt auf der Schleuderscheibe verlagert wird. Um das Streubild beizubehalten, sind an die Auslauföffnungen anschließende Auslaufschächte verstellbar angeordnet. Düngerspezifische Faktoren werden hierbei jedoch nicht berücksichtigt.

Bei dem eingangs genannten Zweischeibenstreuer (WO 88/09 609), der sich durch weit auseinander liegende Scheiben auszeichnet, sind verschiedene Möglichkeiten zur Beeinflussung des Streubildes, z. B. Austausch der Schleuderscheiben, Neigen der Schleuderscheiben etc., bekannt. Eine Anpassung an verschiedene Düngerarten ist jedoch nur sehr bedingt möglich. Immerhin hat er den Vorteil, daß aufgrund des hydraulischen Antriebs nicht nur eine einfache Bauweise, sondern eine einfache Regelung der Drehzahl und damit eine einfache Änderung der Arbeitsbreite möglich ist. Durch die Verschwenkbarkeit der Schleuderscheiben ist der weitere Vorteil gegeben, daß ohne Montagearbeiten eine Abstreuprobe durch Wegschwenken der Schleuderscheibe vorgenommen werden kann. Im Rahmen einer solchen Abstreuprobe lassen sich einige düngerspezifische Einflußfaktoren aufnehmen und anhand von Streutabellen korrigierend im Streubild umsetzen. Damit werden jedoch in erster Linie mengenspezifische Faktoren erfaßt, um bei dem gerade eingesetzten Dünger die gewünschte Streumenge auf der gewünschten Arbeitsbreite auszubringen.

Der Erfindung liegt die Aufgabe zugrunde, den eingangs genannten Schleuderstreuer dahingehend weiterzuentwickeln, daß außer der einfachen Abstreuprobe eine einfache Anpassung des Streubildes an düngerspezifische Eigenschaften für verschiedene Arbeitsbreiten möglich ist.

Diese Aufgabe wird erfindungsgemäß dadurch gelöst, daß beide Schleuderscheiben durch Verschwenken der Schwenkarme um die senkrechte Achse gleichsinnig und um gleiche Winkelbeträge aus der Betriebsstellung in wenigstens eine weitere Betriebsstellung unter Verlagerung des durch die Auslauföffnung vorgegebenen Aufgabepunktes des Düngers auf der Scheibe nach außen und/oder entgegen der Drehrichtung sowie aus jeder Betriebsstellung in die Freigabestellung verstellbar sind, und daß die Drehzahl der Hydromotoren zur Konstanthaltung bzw. Einstellung einer bestimmten Arbeitsbreite nach Maßgabe der Verlagerung des Aufgabepunktes veränderbar ist.

Die an sich bekannte, schwenkbare Lagerung der beiden Schleuderscheiben wird gemäß der Erfindung dazu genutzt, den Aufgabepunkt des Düngers auf den Schleuderscheiben zu variieren, indem die Scheiben mittels der Schwenkarme zwischen wenigstens zwei Betriebsstellungen in gegebenenfalls mehreren Stufen verstellbar sind. So wird einem Dünger mit sehr glattem Korn eine Betriebsstellung zugeordnet, bei der sich der Aufgabepunkt näher der Scheibenmitte befindet, während ein Dünger mit rauherem Korn weiter außen aufgegeben wird. Auf diese Weise läßt sich erreichen, daß das Düngerkorn trotz unterschiedlicher Eigenschaften immer etwa an der gleichen Stelle den Boden erreicht. Es liegt auf der Hand, daß mit dieser Ausbildung eine besonders einfache Veränderung des Aufgabepunktes möglich ist, da keinerlei Umbau- oder Montagearbeiten notwendig sind. Die Erfindung trägt weiterhin dem Umstand Rechnung, daß sich mit wechselnder Düngerart auch die Arbeitsbreite ändert. Bei rauhem Korn wird ein größerer Anteil weiter außen abgelegt, während bei glattem Korn ein größerer Anteil weiter innen auf den Boden gelangt. Bei rauhem Korn vergrößert sich also die Arbeitsbreite, während sie bei glattem Korn abnimmt. Um diesen Effekt auszugleichen und für eine vom Dünger unabhängige konstante Arbeitsbreite zu sorgen, wird die Drehzahl der Hydromotoren entsprechend der Verlagerung des Aufgabepunktes also in Anpassung an die Düngerart verändert. Praktische Versuche haben gezeigt, daß das Verlagern des Aufgabepunktes von innen nach außen und zugleich entgegen der Drehrichtung am ehesten zu einer Egalisierung des Streubildes im Sinne einer dreieckförmigen Ausbildung führt. Schließlich läßt sich jede Schleuderscheibe aus jeder Betriebsstellung in die Freigabestellung verschwenken, um bei vorgegebener Maschineneinstellung (Aufgabepunkt) jederzeit eine Abstreuprobe vornehmen zu können. Es sind somit weder Änderungsmaßnahmen an den Scheiben oder den Auslauföffnungen, noch ist ein Neigen des Streuers nötig. Der Streuer bleibt vielmehr stets in seiner horizontal ausgerichteten Lage, kann also auch auf eine Pritsche aufgesetzt werden.

In bevorzugter Ausführung ist vorgesehen, daß die Scheiben mittels der Schwenkarme zwischen mehreren Betriebsstellungen unter Verlagerung des Aufgabepunktes verstellbar sind.

Vorzugsweise sind die Schwenkarme zwischen den Betriebsstellungen der Scheiben stufenlos verstellbar, da bereits kleine Änderungen in der Lage des Aufgabepunktes das Streubild nennenswert beeinflussen.

In weiterhin vorteilhafter Ausgestaltung ist vorgesehen, daß in der einen Endstellung der Scheibe der Aufgabepunkt unmittelbar neben deren Mittelpunkt liegt.

Je näher die eine extreme Betriebsstellung am Mittelpunkt der Scheibe liegt, um so stärker läßt sich das Streubild durch Verlagerung des Aufgabepunktes nach außen und entgegen der Drehrichtung beeinflussen. Mit anderen Worten: Durch relativ geringe Verstellwege ist eine größtmögliche Beeinflussung des Streubildes gegeben.

Bei dem eingangs genannten Schleuderstreuer läßt sich gemäß einem weiteren Merkmal der Erfindung bei einer vorgegebenen Düngerart die Arbeitsbreite in einfacher Weise dadurch ändern, daß beide Schleuderscheiben mittels der Schwenkarme gleichsinnig und um gleiche Winkelbeträge derart verstellbar sind, daß der durch die Auslauföffnung vorgegebene Aufgabepunkt des Düngers auf der Scheibe für kleine Arbeitsbreiten entgegen der Drehrichtung und/oder nach außen unter Minderung der Drehzahl der Hydromotoren und für große Arbeitsbreiten in Drehrichtung und/oder nach innen unter Erhöhung der Drehzahl der Hydromotoren verlagerbar ist.

Während beim Stand der Technik die Einstellung verschiedener Arbeitsbreiten im wesentlichen nur durch Änderung der Drehzahl oder durch verschiedene Scheiben verwirklicht wird, ist erfindungsgemäß eine Veränderung der Drehzahl und eine Verlagerung des Aufgabepunktes in bestimmter Verknüpfung miteinander vorgesehen, so daß mit gleichen Scheiben und kleinerem Drehzahlbereich ein gleich großer Bereich an Arbeitsbreiten abgedeckt werden kann.

Eine weiterhin vorteilhafte Ausführungsform zeichnet sich dadurch aus, daß die Scheiben mittels der Schwenkarme aus der Betriebsstellung entgegen der Fahrtrichtung nach hinten schwenkbar sind, und daß das maschinenfeste Lager der Schwenkarme in Fahrtrichtung vor der Verbindungslinie der Mittelpunkte beider Scheiben angeordnet ist.

Mit dieser Lagerung der Schwenkarme und der nach hinten gerichteten Schwenkbewegung der Scheiben ist die vorstehend als vorteilhaft angegebene Verlagerung des Aufgabepunktes nach außen und entgegen der Drehrichtung möglich, wenn die Scheiben gegensinnig und von innen nach außen umlaufen.

Um die Scheiben bzw. die Schwenkarme in den verschiedenen Betriebsstellungen festzustellen, ist gemäß einer bevorzugten Ausführungsform vorgesehen, daß zwischen jedem Schwenkarm und einem maschinenfesten Rahmenteil eine Verriegelungseinrichtung wirksam ist, mittels der die Schleuderscheiben in der jeweiligen Betriebsstellung und der Freigabestellung arretierbar sind.

Die Verriegelungseinrichtung kann beispielsweise einen an dem maschinenfesten Rahmenteil verstellbar angeordneten Riegelzapfen und einen diesen teilweise umgreifenden Riegel aufweisen, der mit dem Schwenkarm und mit einer Handhabe verbunden ist, so daß er in den verschiedenen Positionen von Hand eingestellt werden kann. Vorzugsweise sitzt der Riegel an dem einen Ende eines zweiarmigen Stellhebels, an dessen anderem Ende die Handhabe angeordnet ist und der dazwischen an einer senkrechten Achse am Schwenkarm nahe dessen freiem Ende gelagert ist.

Mit Vorteil steht der Stellhebel unter Wirkung einer den Riegel mit dem Riegelzapfen in Eingriff haltenden Feder. Mittels des Stellhebels läßt sich der Riegel aus dem Riegelzapfen entgegen der Federkraft ausheben. Durch einen entsprechenden Hebelarm am Stellhebel können die Betätigungskräfte gering gehalten werden, andererseits durch entsprechende Anordnung der Feder nahe dem Riegel die Verriegelungskraft ausreichend groß sein, um auch bei noch so starken Erschütterungen ein Lösen der Verriegelung zu verhindern.

Es greift deshalb die Feder einerseits an dem der Handhabe gegenüberliegenden Ende des Stellhebels, andererseits an dem Schwenkarm an.

In weiterhin zweckmäßiger Ausgestaltung ist vorgesehen, daß der Riegelzapfen in einer Führung an dem maschinenfesten Rahmenteil verstellbar und mittels von Hand betätigter Spannschrauben am Rahmenteil festsetzbar ist, wobei der Riegelzapfen vorzugsweise mittels einer am Rahmenteil geführten Stellspindel verstellbar ist. Hiermit ist in besonders einfacher Weise eine stufenlose Verstellung möglich, andererseits mittels der Spannschrauben eine einwandfreie Fixierung der Betriebsstellung erreichbar.

In einer weiteren zweckmäßigen Ausführungsform ist vorgesehen, daß am Rahmenteil eine Skala für die Betriebsstellung und ein mit dem Riegelzapfen mitgeführter Anzeiger vorgesehen ist, so daß durch Anzeige an der Skala der Aufgabepunkt der Schleuderscheibe leicht einzustellen ist.

Mit Vorteil ist die Führung innen am Rahmenteil und die Skala außen angeordnet. Die Führung ist somit gegen Kräfte von außen geschützt, andererseits die Ablesbarkeit der Skala von außen möglich.

Mit Vorteil verläuft der die Handhabe aufweisende Arm des zweiarmigen Stellhebels in der Betriebsstellung nach außen und hinten, wodurch die Bedienbarkeit erleichtert wird. Andererseits liegt der Stellhebel außerhalb der Umlaufbahn der Schleuderscheiben, so daß auch eine gefahrlose Verstellung möglich ist.

Eine weitere vorteilhafte Ausführungsform zeichnet sich dadurch aus, daß das maschinenfeste Rahmenteil ein den Schwenkarm auf seiner Schwenkbahn außenseitig umgebender, rechteckiger Schutzrahmen ist, der an seinem außen liegenden, zur Fahrtrichtung parallelen Schenkel die Führung für den verstellbaren Riegelzapfen und an dem dazu senkrechten, hinteren Schenkel einen festen Riegelzapfen für die Freigabestellung der Schleuderscheibe aufweist.

Schließlich ist es zweckmäßig, wenn die beiden Riegelzapfen jeweils an den Innenseiten der Rahmenschenkel angeordnet sind, um sie gleichfalls gegen Beschädigungen zu schützen.

Nachstehend ist die Erfindung anhand eines in der Zeichnung wiedergegebenen Ausführungsbeispiels beschrieben. In der Zeichnung zeigen:
- Figur 1: eine Ansicht auf die Frontseite eines Zweischeibenstreuers;
- Figur 2: eine Ansicht auf den Streuer gemäß Figur 1 von oben;
- Figur 3: eine Draufsicht auf eine der beiden Schleuderscheiben;
- Figur 4: eine vergrößerte Detailansicht aus der Darstellung gemäß Figur 1 und
- Figur 5: eine Ansicht auf eine Seite des Streuers.

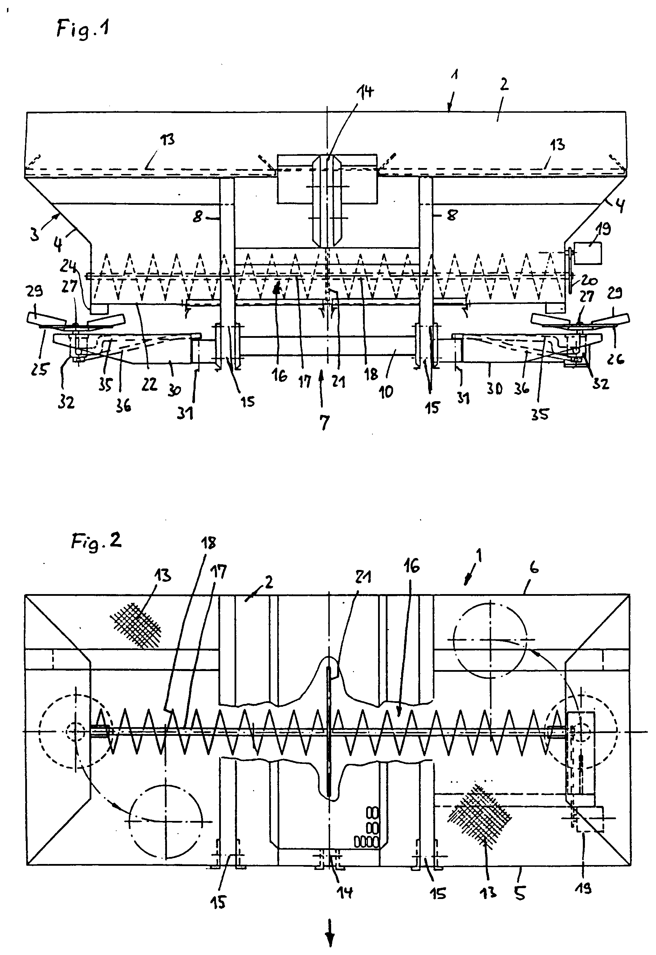

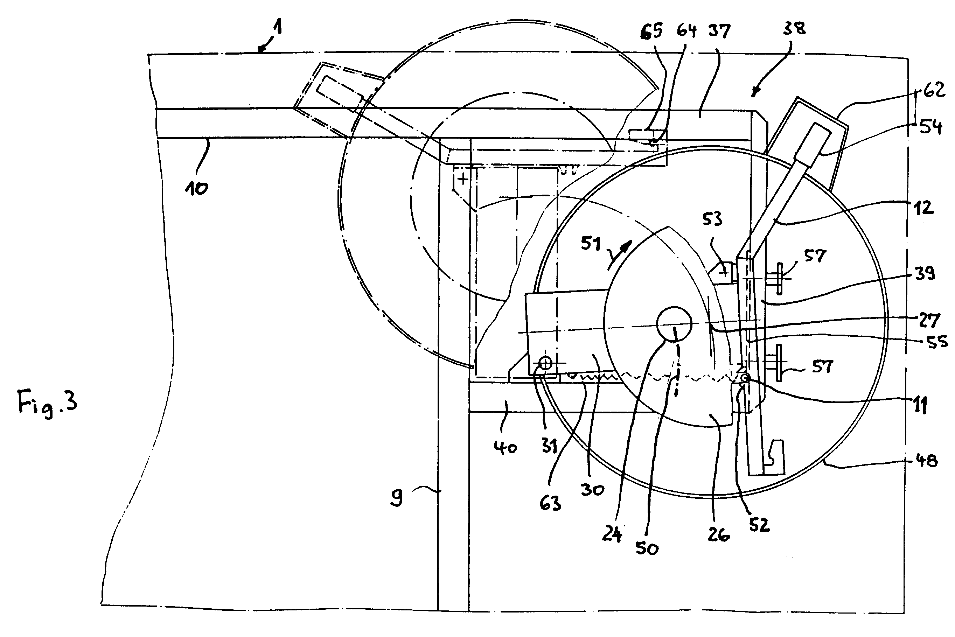

Der in der Zeichnung wiedergegebene Schleuderstreuer weist einen Düngerbehälter 1 auf, der sich mit seiner Längsachse quer zu der in Figur 2 wiedergegebenen Fahrtrichtung erstreckt und eine Breite aufweist, die der für den Straßentransport zulässigen Gesamtbreite entspricht. Er besteht aus einem im wesentlichen rechteckigen Oberteil 2 und einem Unterteil 3, dessen Seitenwände 4, Frontwand 5 und Rückwand 6 nach innen geneigt sind. Dabei laufen die Frontwand 5 und Rückwand 6 in einen muldenförmigen Boden (siehe Figur 3) ein. Auf die offene Stirnseite des rechteckigen Oberteils 2 können gegebenenfalls noch entsprechende Aufsätze aufgesetzt werden, um das Fassungsvermögen des Vorratsbehälters 1 zu erhöhen. In das Oberteil 2 sind Siebrahmen 13 eingelegt und in der Mitte ein aussteifendes Lochblech eingesetzt.

Der Schleuderstreuer weist ferner einen Tragrahmen 7 auf, der im wesentlichen aus zwei senkrechten L-förmigen Trägern 8 (Figur 3) und einer deren untere Schenkel verbindenden Quertraverse 10 besteht, wobei letztere die Schenkel nach außen überragt.

Die L-förmigen Träger 8 des Rahmens 7 sind innerhalb der vorderen Vertikalflucht des Behälters 1 angeordnet. Zu diesem Zweck kann der Behälter 1 im Bereich seines Oberteils 2 an der Frontwand 5 nach innen eingezogen sein. Im übrigen liegt der größere Teil der L-förmigen Träger 8 unterhalb der geneigten Frontwand 5 des Behälters 1. Auf diese Weise sitzen die Anschlußpunkte 14 für den Oberlenker und die Anschlußpunkte 15 für den Unterlenker nächstmöglich zur Mittellängsebene des Behälters, wodurch sich eine günstige Schwerpunktlage ergibt.

Innerhalb des Behälters 1 ist unmittelbar im muldenförmigen Boden ein Querförderer 16 angeordnet, der beim gezeigten Ausführungsbeispiel aus einer durchgehenden Welle 17 und einer mit Abstand von dieser getragenen Schraubenwendel 18 besteht. Der Querförderer 16 wird an einer Seite mittels eines Hydraulikmotors 19 über ein Kettenrad 20 angetrieben und ist in seinem mittleren Bereich bei 21 am Behälter abgestützt. Der muldenförmige Boden weist im Bereich seiner äußeren Enden ebene Abschnitte 22 (siehe Figur 3) auf, in denen die Austragsöffnungen vorgesehen sind. Im Bereich dieser Austragsöffnungen 24 weist der Querförderer keine Förderorgane, sondern lediglich noch Umwälzorgane auf, die dafür sorgen, daß das oberhalb der Austragsöffnung liegende Gut nicht mehr nach außen gefördert, sondern nur noch umgewälzt wird.

Unterhalb der beiden außen liegenden Austragsöffnungen ist je eine Schleuderscheibe 25, 26 angeordnet, deren Achse 27, 28 gegenüber der Austragsöffnung versetzt ist, so daß der die Austragsöffnung verlassende Dünger mit Abstand von der Achse auf die Schleuderscheiben 25, 26 trifft.

Die Schleuderscheiben 25, 26 weisen in herkömmlicher Art mehrere Schleuderschaufeln 29 auf. Im übrigen sitzen die Schleuderscheiben 25, 26 an Schwenkarmen 30, die an vertikalen Achsen 31 gelagert sind. Bei dem Ausführungsbeispiel gemäß Figur 1 kann die eine Schleuderscheibe 25 in Fahrtrichtung 2 nach vorne, die andere Schleuderscheibe 26 entgegen der Fahrtrichtung nach hinten geschwenkt werden, vorzugsweise jedoch sind beide Schleuderscheiben nur nach hinten schwenkbar, wie in Figur 2 bei der rechts gezeigten Schleuderscheibe 25 angedeutet.

Die Schleuderscheiben 25, 26 sind mittels je eines Hydraulikmotors 32 angetrieben, die jewels am äußeren Ende der Schwenkarme 30 angebracht sind. Beim Ausführungsbeispiel der Figur 1 sitzen die Schleuderscheiben unmittelbar auf der nach oben weisenden Abtriebswelle des Hydraulikmotors 32 und sind über die Hydraulikleitungen 35, 36 von einer nicht gezeigten Pumpe versorgt. Die Hydraulikleitungen 35, 36 sind vorzugsweise geschützt in den Schwenkarmen 30 verlegt.

In Figur 3 ist die Schleuderscheibe 26 mit durchgezogenen Linien in der Betriebsstellung und mit strichpunktierten Linien in der ausgeschwenkten Stellung - ähnlich der Darstellung in Figur 2 - für die Vornahme einer Abstreuprobe gezeigt. Oberhalb der in Betriebsstellung befindlichen Schleuderscheibe 26 ist die Auslauföffnung 24 angedeutet, die versetzt neben der Drehachse 27 der Schleuderscheibe 26 ausmündet. An dem Schwenkarm 30 ist ein Stellhebel 12 gelagert, mittels dessen die Schleuderscheibe 26 aus der Betriebsstellung in die die Auslauföffnung 24 freigebende Stellung geschwenkt werden kann. In der in Figur 3 gezeigten Betriebsstellung ist der Schwenkarm 30 und somit die Schleuderscheibe 26 am Anschlag 11 verriegelt. Mit dem gleichen Stellhebel 12 kann die Schleuderscheibe in der ausgerückten Stellung gleichfalls an einem Anschlag verriegelt sein, wie dies mit strichpunktierten Linien angedeutet ist.

Figur 3 zeigt ferner die unteren Schenkel 9 der L-förmigen Träger 8 (Figur 1) des Tragrahmens, die an ihren hinteren freien Enden durch die Quertraverse 10 verbunden sind. Die Quertraverse 10 weist einen die unteren Schenkel 9 nach außen überragenden Abschnitt 37 auf, der einen Teil eines Schutzrahmens 38 bildet, welcher durch einen weiteren sich in Fahrtrichtung erstreckenden Schenkel 39 und einen zu dem Abschnitt 37 parallelen Schenkel 40 sowie durch den unteren Schenkel 9 der L-förmigen Träger vervollständigt wird. Innerhalb des Schutzrahmens 38 ist der Schwenkarm 30 angeordnet und verschwenkbar. Zu diesem Zweck sitzt das senkrechte Schwenklager 31 an dem Schenkel 40 des Schutzrahmens 38.

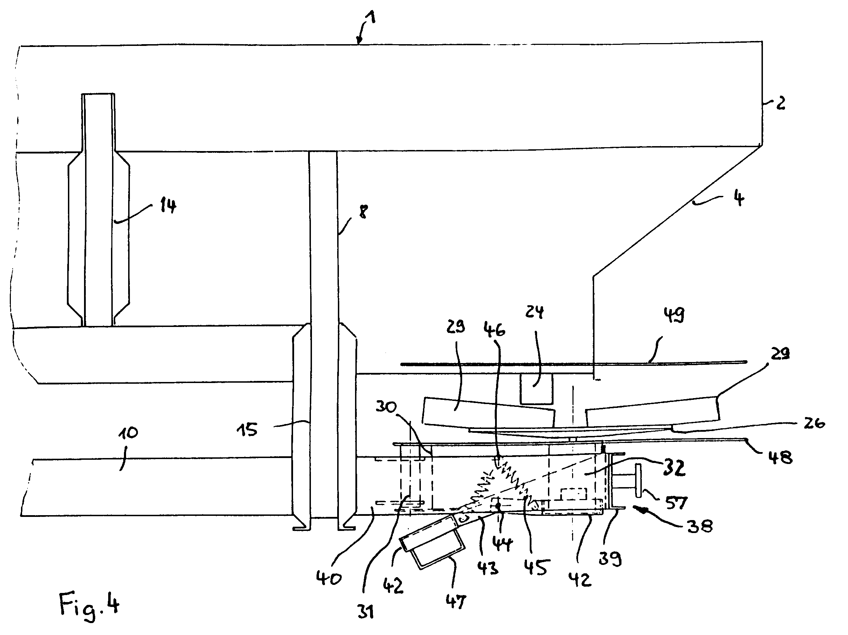

In Figur 4 ist der die Schleuderscheibe 26 antreibende Hydromotor 32 erkennbar, auf dessen Abtriebswelle die Schleuderscheibe 26 aufgesetzt ist. Der Hydromotor 32 und damit auch das äußere Ende des Schwenkarms 30 ist nach unten durch eine Abweiserkufe 42 geschützt, die von einem flachen U-Profil gebildet ist und die den Hydromotor 32 nicht nur von unten, sondern auch von der Seite her untergreift. Die Abweiserkufe 42 sitzt an zwei parallelen Hebeln 43, die an einer etwa in Fahrtrichtung liegenden Achse 44 schwenkbar gelagert sind. Die Schwenkachse 44 wird beispielsweise von zwei Bolzen gebildet, von denen einer am äußeren Abschnitt 37 der Quertraverse 10, der andere an dem dazu parallelen Schenkel 40 des Schutzrahmens 38 (siehe Figur 3) angeordnet ist. An dem Hebel 43 greift eine Feder 45 an, die bei 46 am Schutzrahmen 38 angehängt ist, wobei sich der Anhängepunkt 46 etwa oberhalb der Schwenkachse 44 befindet. Auf diese Weise wird die Abweiserkufe 42 unter Wirkung der Feder 45 in der Funktionsstellung (Figur 4, rechts) gehalten. Um die Abweiserkufe aus dieser Stellung nach innen schwenken zu können, ist an ihrem Ende ein Handgriff 47 angebracht. Beim Verschwenken läuft die Feder 45 über die Schwenkachse 44 in die links wiedergegebene Lage, in der sie die Abweiserkufe 42 in ihrer verschwenkten Lage hält. In dieser Lage kann der Schwenkarm 30 mit der Schleuderscheibe 26 in die in Figur 3 strichpunktiert wiedergegebene Stellung geschwenkt werden, so daß der Raum unterhalb der Auslauföffnung 24 frei ist und der Düngerstrahl ungehindert nach unten austreten und ferner ein Auffanggefäß unterhalb der Auslauföffnung 24 aufgestellt oder eingehängt werden kann.

Wie aus Figur 4 ersichtlich überragt der Hydromotor 32 die Unterkante des Schutzrahmens 38 nach unten nicht. Die Abweiserkufe 42 liegt etwa in Höhe der Unterkante des Schutzrahmens 38 oder höher.

An dem Schwenkarm 30 ist ferner ein zur Schleuderscheibe 26 konzentrischer Schutzring 48 angebracht. Ein gleich großer Schutzring 49 in ebenfalls konzentrischer Anordnung zur Schleuderscheibe 26 ist unmittelbar oberhalb dieser am Vorratsbehälter angebracht, so daß ein wirksamer Unfallschutz gegen Berühren der Schleuderscheibe 26 gebildet ist.

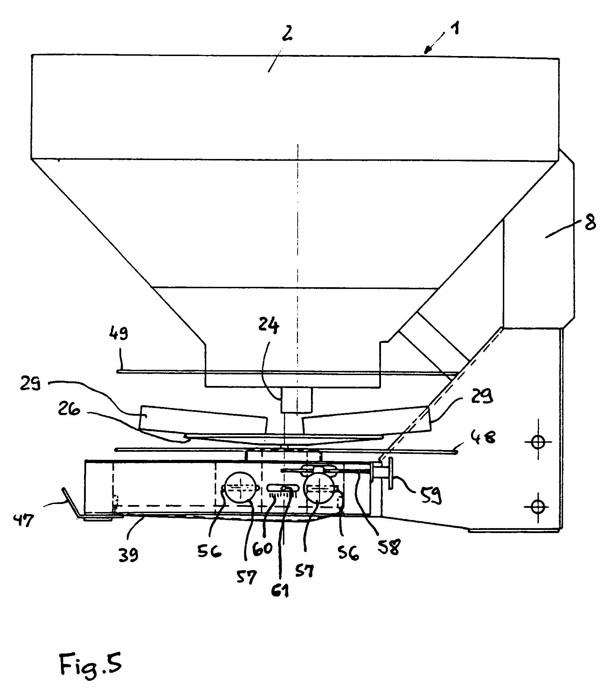

In Figur 3 ist eine Betriebsstellung der Schleuderscheibe 26 wiedergegeben. Der Aufgabepunkt befindet sich unterhalb der mit 24 angedeuteten Auslaßöffnung nahe der Achse 27 bzw. dem Mittelpunkt der Scheibe 26. Die Schleuderscheibe 26 läßt sich mittels des Schwenkarms 30 stufenlos verschwenken, so daß der Aufgabepunkt etwa auf der strichpunktiert wiedergegebenen Linie 50 auf der Scheibe entgegen der Drehrichtung 51 und gleichzeitig nach außen wandert. Zur Verstellung des Aufgabepunktes ist der Anschlag 11 als Riegelzapfen ausgebildet, der von einem Riegel 52 mit U-förmigem Querschnitt umfaßt wird. Der Riegel 52 sitzt an dem einen Arm des zweiarmigen Stellhebels 12, der bei 53 am Schwenkarm 30 gelagert und an seinem anderen Arm mit einer Handhabe 54 versehen ist. Der Riegelzapfen 11 sitzt an einer Platte 55, die an dem Seitenholm 39 des Schutzrahmens 38 stufenlos verstellbar ist. Zu diesem Zweck sind in dem Seitenholm 39, wie Figur 5 zeigt, zwei fluchtende Langlöcher 56 angeordnet, in denen die Führungsplatte 55 mittels Bolzen geführt ist. Die Bolzen wirken weiterhin mit von Hand bedienbaren Spannmuttern zusammen oder sind ihrerseits als Spannschrauben ausgebildet, die mit großflächigen Drehgriffen 57 oder Knebeln versehen sind.

Eine millimetergenaue Verstellung der Führungsplatte 55 bzw. des Riegelzapfens 11 ist mittels der Stellspindel 58 mit Drehgriff 59 möglich. Die eingestellte bzw. einzustellende Betriebsstellung läßt sich anhand einer am Rahmenschenkel 39 angeordneten Skala 60 ablesen, die entlang eines Langlochs verläuft, in das wiederum ein Anzeiger 61 an der Führungsplatte 55 eingreift.

Um den Aufgabepunkt aus der Betriebsstellung gemäß Figur 3 zu verlagern, wird der Stellhebel 12 mittels der Handhabe 54 um das senkrechte Lager 53 geschwenkt. Dabei kann sich die Bedienungsperson mit der Hand an dem Bügel 62 am Schutzring 48 abstützen. Das Öffnen der Verriegelung geschieht entgegen der Kraft der Zugfeder 63, die zwischen dem Schwenkarm 30 und dem der Handhabe 54 gegenüberliegenden Ende des zweiarmigen Stellhebels 12 aufgespannt ist und die den Riegel 52 in der Betriebsstellung auf dem Riegelzapfen 11 hält. Beim Betätigen des Stellhebels 12 kommt der Riegel 52 vom Riegelzapfen 11 frei. Gegebenenfalls kann der Schwenkarm 30 in die strichpunktiert gegebene Position der Schleuderscheibe verschwenkt werden. Nach Lösen der Spannschrauben mittels der Drehgriffe 57 kann dann die Führungsplatte 55 mit dem Riegelzapfen 11 mittels der Spindel 58 in die gewünschte neue Betriebsstellung verschoben werden. Ist diese erreicht, wird die Schleuderscheibe mit dem Schwenkarm zurückgeschwenkt und der Riegel 52 wieder über den Riegelzapfen 11 geschoben. Aus jeder der gezeigten Betriebsstellungen läßt sich die Schleuderscheibe 26 in die strichpunktiert wiedergegebene Freigabestellung schwenken, um beispielsweise eine Abstreuprobe zu machen oder die Schleuderscheibe beispielsweise gegen eine Grenzstreuscheibe auszutauschen. In der Freigabestellung wirkt der Stellhebel 12 mit einem festen Riegelzapfen 64 an dem hinteren Rahmenschenkel 37 zusammen. Zu diesem Zweck ist der Stellhebel 12 an dem der Handhabe 54 gegenüberliegenden Ende mit einem hakenartigen Riegel 65 versehen, der beim gezeigten Ausführungsbeispiel außen angeordnet ist, wodurch sich der Vorteil ergibt, daß beide Riegelzapfen 11 und 64 an den Rahmenschenkeln jeweils innenseitig angeordnet sein können.

Durch die Verlagerung des Aufgabepunktes entlang der Linie 50 ändert sich zugleich auch die Arbeitsbreite. Um diese unabhängig von der Verlagerung des Aufgabepunktes konstant zu halten, wird die Drehzahl der Schleuderscheibe 26 mittels des Hydromotors 32 entsprechend nachgeregelt. Umgekehrt kann die Arbeitsbreite durch gleichzeitige Verlagerung des Aufgabepunktes und Änderung der Drehzahl der Scheiben auch variiert werden.

## Patentansprüche

1. Schleuderstreuer für Dünger, bestehend aus einem Vorratsbehälter mit zwei mit Abstand voneinander angeordneten, einstellbaren Auslauföffnungen, und je einer unter jeder Auslauföffnung angeordneten Schleuderscheibe, die beide mittels je eines Hydromotors mit regelbarer Drehzahl angetrieben und an einem maschinenfest an einer senkrechten Achse gelagerten Schwenkarm angeordnet sind, mittels dessen sie aus der Betriebsstellung unterhalb der Auslauföffnung in eine den Raum unterhalb derselben freigebende Stellung gleichsinnig schwenkbar sind, dadurch gekennzeichnet, daß beide Schleuderscheiben (26) durch Verschwenken der Schwenkarme (30) um die senkrechte Achse gleichsinnig und um gleiche Winkelbeträge aus der Betriebsstellung in wenigstens eine weitere Betriebsstellung unter Verlagerung des durch die Auslauföffnung (24) vorgegebenen Aufgabepunktes des Düngers auf der Scheibe nach außen und/oder entgegen der Drehrichtung (51) sowie aus jeder Betriebsstellung in die Freigabestellung verstellbar sind, und daß die Drehzahl der Hydromotoren (32) zur Konstanthaltung bzw. Einstellung einer bestimmten Arbeitsbreite nach Maßgabe der Verlagerung des Aufgabepunktes veränderbar ist.

2. Schleuderstreuer nach Anspruch 1, dadurch gekennzeichnet, daß die Scheiben (26) mittels der Schwenkarme (30) zwischen mehreren Betriebsstellungen unter Verlagerung des Aufgabepunktes verstellbar sind.

3. Schleuderstreuer nach Anspruch 1 oder 2, dadurch gekennzeichnet, daß die Schwenkarme (30) zwischen den Betriebsstellungen der Scheiben (26) stufenlos verstellbar sind.

4. Schleuderstreuer nach einem der Ansprüche 1 bis 3, dadurch gekennzeichnet, daß in der einen Endstellung der Scheibe (26) der Aufgabepunkt unmittelbar neben deren Mittelpunkt liegt.

5. Schleuderstreuer nach einem der Ansprüche 1 bis 4, dadurch gekennzeichnet, daß beide Schleuderscheiben (26) mittels der Schwenkarme (30) gleichsinnig und um gleiche Winkelbeträge derart verstellbar sind, daß der durch die Auslauföffnung (24) vorgegebene Aufgabepunkt des Düngers auf der Scheibe für kleine Arbeitsbreiten entgegen der Drehrichtung (51) und/oder nach außen unter Minderung der Drehzahl der Hydromotoren (32) und für große Arbeitsbreiten in Drehrichtung und/oder nach innen unter Erhöhung der Drehzahl der Hydromotoren verlagerbar ist.

6. Schleuderstreuer nach einem der Ansprüche 1 bis 5, dadurch gekennzeichnet, daß die Scheiben (26) mittels der Schwenkarme (30) aus der Betriebsstellung entgegen der Fahrtrichtung nach hinten schwenkbar sind, und daß das maschinenfeste Lager (31) der Schwenkarme in Fahrtrichtung vor der Verbindungslinie der Mittelpunkte (27) beider Scheiben (26) angeordnet ist.

7. Schleuderstreuer nach einem der Ansprüche 1 bis 6, dadurch gekennzeichnet, daß zwischen jedem Schwenkarm (30) und einem maschinenfesten Rahmenteil (38) eine Verriegelungseinrichtung (11, 12, 52 bis 54) wirksam ist, mittels der die Schleuderscheiben (26) in der jeweiligen Betriebsstellung und der Freigabestellung arretierbar sind.

8. Schleuderstreuer nach einem der Ansprüche 1 bis 7, dadurch gekennzeichnet, daß die Verriegelungseinrichtung einen an dem maschinenfesten Rahmenteil (38) verstellbar angeordneten Riegelzapfen (11) und einen diesen teilweise umgreifenden, mit einer Handhabe (54) versehenen und mit dem Schwenkarm (30) verbundenen Riegel (52) aufweist.

9. Schleuderstreuer nach einem der Ansprüche 1 bis 8, dadurch gekennzeichnet, daß der Riegel (52) an dem einen Ende eines zweiarmigen Stellhebels (12) sitzt, an dessen anderem Ende die Handhabe (54) angeordnet ist und der dazwischen an einer senkrechten Achse (53) am Schwenkarm (30) nahe dessen freiem Ende gelagert ist.

10. Schleuderstreuer nach einem der Ansprüche 1 bis 9, dadurch gekennzeichnet, daß der Stellhebel (12) unter Wirkung einer den Riegel (52) mit dem Riegelzapfen (11) in Eingriff haltenden Feder (63) steht.

11. Schleuderstreuer nach einem der Ansprüche 1 bis 10, dadurch gekennzeichnet, daß die Feder (63) an dem der Handhabe (54) gegenüberliegenden Ende des Stellhebels (12) einerseits und dem Schwenkarm (30) andererseits angreift.

12. Schleuderstreuer nach einem der Ansprüche 1 bis 11, dadurch gekennzeichnet, daß der Riegelzapfen (11) in einer Führung (56) an dem maschinenfesten Rahmenteil (38) verstellbar und mittels von Hand betätigter Spannschrauben (57) am Rahmenteil festsetzbar ist.

13. Schleuderstreuer nach einem der Ansprüche 1 bis 12, dadurch gekennzeichnet, daß der Riegelzapfen (11) mittels einer am Rahmenteil geführten Stellspindel (58) verstellbar ist.

14. Schleuderstreuer nach einem der Ansprüche 1 bis 13, dadurch gekennzeichnet, daß am Rahmenteil (38) eine Skala (60) für die Betriebsstellung und ein mit dem Riegelzapfen (11) mitgeführter Anzeiger (61) vorgesehen ist.

15. Schleuderstreuer nach einem der Ansprüche 1 bis 14, dadurch gekennzeichnet, daß die Führung (55, 56) innen am Rahmenteil (38) und die Skala (60) außen angeordnet ist.

16. Schleuderstreuer nach einem der Ansprüche 1 bis 15, dadurch gekennzeichnet, daß der die Handhabe (54) aufweisende Arm des zweiarmigen Stellhebels (12) in der Betriebsstellung nach außen und hinten verläuft.

17. Schleuderstreuer nach einem der Ansprüche 1 bis 16, dadurch gekennzeichnet, daß das maschinenfeste Rahmenteil ein den Schwenkarm auf seiner Schwenkbahn außenseitig umgebender, rechteckiger Schutzrahmen (38) ist, der an seinem außen liegenden, zur Fahrtrichtung parallelen Schenkel (39) die Führung (55, 56) für den verstellbaren Riegelzapfen und an dem dazu senkrechten, hinteren Schenkel (37) einen festen Riegelzapfen (64) für die Freigabestellung der Schleuderscheibe (26) aufweist.

18. Schleuderstreuer nach einem der Ansprüche 1 bis 17, dadurch gekennzeichnet, daß die beiden Riegelzapfen (11, 64) jeweils an den Innenseiten der Rahmenschenkel (37, 39) angeordnet sind.

## Claims

1. Centrifugal spreader for fertilizer, comprising a storage container with two spaced, adjustable outlet openings and in each case a centrifugal disk placed below each outlet opening and both of which are driven by in each case one adjustable speed hydraulic motor and are located on a machine-fixed pivoting arm mounted on a vertical axis, by means of which they can be swung in the same direction out of the operating position below the outlet opening into a position freeing the space below the same, characterized in that both centrifugal disks (26) are adjustable by swinging the pivoting arms (30) around the vertical axis in the same direction by identical angles from the operation position into at least one further operating position accompanied by the outward displacement of the delivery point of the fertilizer to the disk predetermined by the outlet opening (24) and/or in opposition to the rotation direction (51), as well as from each operating position into the freeing position and that the speed of the hydraulic motors (32) is variable for keeping constant or adjusting a certain working width as a function of the displacement of the delivery point.

2. Centrifugal spreader according to claim 1, characterized in that the disks (26) are adjustable by the pivoting arms (30) between several operating positions, accompanied by the displacement of the delivery point.

3. Centrifugal spreader according to claim 1 and 2, characterized in that the pivoting arms (30) are continuously adjustable between the operating positions of the disks (26).

4. Centrifugal spreader according to one of the claims 1 to 3, characterized in that in one end position of the disk (26) the delivery point is located directly adjacent its centre.

5. Centrifugal spreader according to one of the claims 1 to 4, characterized in that both centrifugal disks (26) are adjustable by the pivoting arms (30) in the same direction and by the same angles, so that the delivery point of the fertilizer to the disk pre-determined by the outlet opening (24) is displaceable counter to the rotation direction (51) for small working widths and/or outwards whilst reducing the speed of the hydraulic motors (32), whereas in the case of large working widths it is displaceable in the rotation direction and/or inwards accompanied by an increase in the speed of the hydraulic motors.

6. Centrifugal spreader according to one of the claims 1 to 5, characterized in that the disks (26) can be swung rearwards in opposition to the direction of travel from the operating position by means of the pivoting arms (30) and that the machine-fixed bearing (31) of the pivoting arms is located in the direction of travel upstream of the connecting line of the centres (27) of both disks (26).

7. Centrifugal spreader according to one of the claims 1 to 6, characterized in that between each pivoting arm (30) and a machine-fixed frame part (38) acts a locking device (11, 12, 52 to 54) by means of which the centrifugal disk (26) can be locked in the particular operating position and the freeing position.

8. Centrifugal spreader according to one of the claims 1 to 7, characterized in that the locking device has a locking pin (10) adjustably arranged on the machine-fixed frame part (38) and a bolt (52) partly embracing the locking pin, provided with a handle (54) and connected to the pivoting arm (30).

9. Centrifugal spreader according to one of the claims 1 to 8, characterized in that the bolt (52) is located on one end of a two-arm control lever (12), on whose other end is located the handle (54) which is intermediately mounted on a vertical axis (53) on the pivoting arm (30) close to its free end.

10. Centrifugal spreader according to one of the claims 1 to 9, characterized in that the control lever (12) is under the action of a spring (63) keeping the bolt (52) in engagement with the locking pin (11).

11. Centrifugal spreader according to one of the claims 1 to 10, characterized in that the spring (63) acts on the end of the control lever (12) opposite to the handle (54) on the one hand and the pivoting arm (30) on the other.

12. Centrifugal spreader according to one of the claims 1 to 11, characterized in that the locking pin (11) is adjustable in a guide (56) on the machine-fixed frame part (38) and can be secured to said frame part by means of manually operated setscrews (57).

13. Centrifugal spreader according to one of the claims 1 to 12, characterized in that the locking pin (11) is adjustable by means of an adjusting spindle (58) guided on the frame part.

14. Centrifugal spreader according to one of the claims 1 to 13, characterized in that on the frame part (38) is provided a scale (60) for the operating position and a pointer (61) carried with the locking pin (11).

15. Centrifugal spreader according to one of the claims 1 to 14, characterized in that the guide (55, 56) is positioned on the inside of the frame part (38) and the scale (60) on the outside.

16. Centrifugal spreader according to one of the claims 1 to 15, characterized in that the arm of the two-arm control lever (12) having the handle (54) passes outwards and rearwards in the operating position.

17. Centrifugal spreader according to one of the claims 1 to 16, characterized in that the machine-fixed frame part is a rectangular protective frame (38) externally surrounding the pivoting arm on its swinging path and which has on its outer piece (39) parallel to the direction of travel the guide (55, 56) for the adjustable locking pin and on its rear piece (37) perpendicular the outer piece a fixed locking pin (64) for the freeing position of the centrifugal disk (26).

18. Centrifugal spreader according to one of the claims 1 to 17, characterized in that the two locking pins (11, 64) are in each case located on the insides of the frame pieces (37, 39).

## Revendications

1. Epandeur centrifuge pour engrais comprenant un réservoir de stockage présentant deux sorties d'écoulement réglables disposées écartées l'une de l'autre, et un disque d'épandage disposé sous chacune des sorties d'écoulement, ces deux disques d'épandage étant entraînés chacun au moyen d'un moteur hydraulique à régime de rotation réglable et disposés chacun sur un bras pivotant autour d'un axe vertical solidaire de la machine, les disques d'épandage étant déplaçables dans le même sens au moyen de ces bras pivotants depuis la position de fonctionnement au-dessous de la sortie d'écoulement jusqu'à une position libérant l'espace au-dessous de celle-ci, caractérisé en ce que les deux disques d'épandage (26) sont déplaçables dans le même sens et selon le même angle par pivotement des bras pivotants (30) autour des axes verticaux à partir de la position de fonctionnement dans au moins une autre position de fonctionnement, de telle sorte que le point de déversement de l'engrais sur le disque, qui est déterminé par la sortie d'écoulement (24), soit décalé vers l'extérieur et/ou à l'encontre du sens de rotation (51), et sont également déplaçables depuis chacune des positions de fonctionnement jusqu'à la position de libération, et en ce que le régime de rotation des moteurs hydrauliques (32) est modifiable de façon à maintenir ou obtenir une largeur d'épandage déterminée selon le décalage de la position du point de déversement.

2. Epandeur selon la revendication 1, caractérisé en ce que les disques d'épandage (26) sont déplaçables au moyen des bras pivotants (30) entre plusieurs positions de fonctionnement impliquant un décalage du point de déversement.

3. Epandeur selon l'une des revendications 1 ou 2, caractérisé en ce que les bras pivotants (30) sont déplaçables de manière continue entre les positions de fonctionnement des disques d'épandage (26).

4. Epandeur selon l'une des revendications 1 à 3, caractérisé en ce que dans une position d'extrémité des disques d'épandage (26), le point de déversement est situé à proximité immédiate de leur centre.

5. Epandeur selon l'une des revendications 1 à 4, caractérisé en ce que les deux disques d'épandage (26) sont déplaçables au moyen des bras pivotants (30) dans le même sens et selon le même angle de telle sorte que le point de déversement de l'engrais sur le disque, déterminé par la sortie d'écoulement (24), est décalé pour des petites largeurs d'épandage à l'encontre du sens de rotation (51) et/ou vers l'extérieur, en réduisant le régime de rotation du moteur hydraulique, et pour des grandes largeurs d'épandage dans le sens de rotation et/ou vers l'intérieur, en augmentant le régime de rotation du moteur hydraulique.

6. Epandeur selon l'une des revendications 1 à 5, caractérisé en ce que les disques d'épandage (26) sont pivotants au moyen des bras pivotants (30) depuis la position de fonctionnement vers l'arrière à l'encontre du sens de la marche, et en ce que le palier (31) des bras pivotants solidaire de la machine est disposé devant la ligne joignant les centres (27) des deux disques (26).

7. Epandeur selon l'une des revendications 1 à 6, caractérisé en ce qu'un dispositif de verrouillage (11,12,54 à 54) agit entre chacun des bras pivotants (30) et une partie de châssis (38) solidaire de la machine, les disques d'épandage (26) étant bloqués au moyen de ce dispositif de verrouillage dans chacune des positions de fonctionnement et dans la position d'écoulement libre.

8. Epandeur selon l'une des revendications 1 à 7, caractérisé en ce que le dispositif de verrouillage présente un boulon de verrouillage (11) monté réglable sur la partie de châssis (38) solidaire de la machine et un verrou (52), entourant partiellement celui-ci, muni d'une manette (54) et relié au bras pivotant (30).

9. Epandeur selon l'une des revendications 1 à 8, caractérisé en ce que le verrou (52) est disposé à une extrémité d'un levier de manoeuvre (12) à deux bras, à l'autre extrémité duquel est disposée la manette (54), et qui est monté à pivotement entre eux sur un axe vertical (53) sur le bras pivotant (30) à proximité de son extrémité libre.

10. Epandeur selon l'une des revendications 1 à 9, caractérisé en ce que le levier de manoeuvre (12) est soumis à l'action d'un ressort (63) maintenant le verrou et le boulon de verrouillage en prise.

11. Epandeur selon l'une des revendications 1 à 10, caractérisé en ce que le ressort (63) s'appuie d'une part sur l'extrémité du levier de manoeuvre (12) opposée à la manette (54), et d'autre part sur le bras pivotant (30).

12. Epandeur selon l'une des revendications 1 à 11, caractérisé en ce que le boulon de verrouillage (11) est déplaçable dans un guide (56) situé sur la partie de châssis (38) solidaire de la machine, et peut être bloqué en position contre la partie de châssis au moyen de vis de serrage (57) actionnées à la main.

13. Epandeur selon l'une des revendications 1 à 12, caractérisé en ce que le boulon de verrouillage (11) est déplaçable au moyen d'une vis de positionnement (58) guidée le long de la partie de châssis.

14. Epandeur selon l'une des revendications 1 à 13, caractérisé en ce qu'il est prévu sur la partie de châssis (38) une échelle graduée (60) pour la position de fonctionnement et un indicateur (61) entraîné par le boulon de verrouillage (11).

15. Epandeur selon l'une des revendications 1 à 14, caractérisé en ce que le guide (55,56) est disposé sur la partie de châssis (38) à l'intérieur et l'échelle graduée (60) à l'extérieur.

16. Epandeur selon l'une des revendications 1 à 15, caractérisé en ce que le bras du levier (12) à deux bras qui comporte la manette (54) s'étend vers l'extérieur et vers l'arrière dans la position de fonctionnement.

17. Epandeur selon l'une des revendications 1 à 16, caractérisé en ce que la partie de châssis solidaire de la machine est un cadre de protection (38) rectangulaire entourant le bras pivotant à l'extérieur sur son trajet de basculement, qui présente sur son aile (39) située à l'extérieur parallèlement à la direction d'avance le guide (55,56) pour le boulon de verrouillage déplaçable et sur l'aile (37) située à l'arrière perpendiculairement à la première un boulon de verrouillage (64) fixe pour la position d'écoulement libre du disque d'épandage (26).

18. Epandeur selon l'une des revendications 1 à 17, caractérisé en ce que les deux boulons de verrouillage (11,64) sont disposés chacun sur la face intérieure des ailes (37,39) du cadre.
